# EUROPEAN PATENT SPECIFICATION

(11) **EP 2 829 839 B1**
(45) Date of publication and mention of the grant of the patent: **24.08.2016**
(21) Application number: 14175871.4
(22) Date of filing: 04.07.2014
(51) Int. Cl.: F41G 3/26, F41J 5/02, F41A 33/02, A63F 9/02

(54) **Game weapon device**
Spielwaffenvorrichtung
Dispositif d'arme de jeu

(30) Priority: 23.07.2013 HK 13108651
(43) Date of publication of application: 28.01.2015
(73) Proprietor: Yoheha Innovation Limited, Kowloon, Hong Kong (CN)
(72) Inventor: YUEN, Terry Shiu-Hang, Kowloon (HK)
(74) Representative: Ward, David Ian

(56) References cited:
- GB-A- 2 446 637
- GB-A- 2 446 638
- US-A- 4 533 144
- US-A- 5 741 185
- US-A1- 2007 129 152
- US-A1- 2007 158 911
- US-A1- 2007 270 217
- US-A1- 2012 052 959
- US-A1- 2013 184 085
- US-B1- 6 545 661

## Description

### GAME WEAPON DEVICE

The present invention relates to a game weapon device particularly, but not exclusively, for use with another game weapon device during a combat game between two or more players.

### BACKGROUND OF THE INVENTION

Game weapon apparatus for combat games are known to work based on an emitter for firing a signal and a detector for detecting the signal as a hit. The majority of such game apparatus are operated by pulling a trigger or pressing a button, and this has become commonplace and hence uninteresting.

US2007/0129152 describes an input device for a shooting game designed to operate with an interactive device, which can be a television set, a computer or a videogame platform. The device comprises an inertial sensing module, for detecting the aiming gesture of a user and issuing a gesture signal.

The invention seeks to eliminate or at least to mitigate such a shortcoming by providing a new or otherwise improved game weapon device.

### SUMMARY OF THE INVENTION

According to the invention, there is provided a game weapon device comprising a portable body, a motion sensor provided at the body for sensing emotion of the body, an emitter provided at the body for, in response to the motion sensor sensing a predetermined motion of the body, emitting a radiation from the body, representing firing of the game weapon device, and a detector provided at the body for detecting a radiation emitted by the emitter of another game weapon device, representing a hit by said another game weapon device. An electronic operating circuit provided at the body controls the operation of the game weapon device, including a hit register for registering a hit each time when the detector detects a radiation.

Preferably, the predetermined motion of the body comprises a swing motion.

It is further preferred that the body includes attachment means for attaching the body to one hand of a player.

It is further preferred that the attachment means comprises at least one strap.

It is further preferred that the attachment means comprises a first loop for extending around the wrist of said one hand of the player and a second loop for extending around one finger of said hand of the player.

Preferably, the attachment means is adapted to attach the body onto the back of said one hand of the player.

In a preferred embodiment, the emitter is fixed to the body such that it emits a radiation in a forward direction substantially parallel to the fingers of said one hand of the player.

Preferably, the emitter comprises an infrared emitter adapted to emit an infrared radiation.

In a preferred embodiment, the emitter is adapted to emit a radiation in a specific direction relative to the body, and the motion sensor is adapted to sense motion of the body in either one of opposite directions transversely to that specific direction.

In a specific construction, the motion sensor comprises a stationary contact, a movable contact adjacent the stationary contact, and a weight arranged to move in response to motion of the body and act upon the movable contact to move the movable contact into contact with the stationary contact, thereby momentarily triggering the motion sensor.

More specifically, the motion sensor switch includes two said stationary contacts between which the movable contact is provided for movement by the weight in opposite directions to come into contact with the relevant stationary contact in its path in each direction.

Preferably, the hit register is adapted to register the hits by counting the hits and keeping a hit count.

It is preferred that the operating circuit is adapted to deactivate the emitter upon the hit count reaching a predetermined number, and preferably the operating circuit includes manual reset means for re-activating the emitter after it has been deactivated.

It is preferred that the operating circuit is adapted to deactivate the emitter upon the emitter having emitted a predetermined number of radiations, and preferably the operating circuit includes manual reload means for re-activating the emitter after it has been deactivated.

Preferably, the operating circuit includes a signal generator for generating a signal to indicate a hit each time when the detector detects a radiation.

### BRIEF DESCRIPTION OF DRAWINGS

The invention will now be more particularly described, by way of example only, with reference to the accompanying drawings, in which:
Figure 1 is a perspective view of an embodiment of a game weapon device in accordance with the invention;
Figure 2 is a front view of the game weapon device of Figure 1;
Figure 3 is a perspective view corresponding to Figure 1, showing internal features of the game weapon device;
Figure 4 is a front view corresponding to Figure 2, showing internal features of the game weapon device;
Figure 5 is another perspective view corresponding to Figure 1, showing internal features of the game weapon device;
Figure 6 is a front view of the game weapon device of Figure 5, showing some of the internal features;
Figure 7 is a circuit diagram of an operating circuit of the game weapon device of Figure 1;
Figures 8A to 8C are perspective views illustrating how the game weapon device of Figure 1 is attached onto a player's hand;
Figures 9A and 9B are perspective views illustrating how the game weapon device of Figures 8A to 8C is fired;
Figures 10A and 10B are perspective views illustrating how the game weapon device of Figure 8C is reset;
Figure 11 is a perspective views illustrating how the game weapon device of Figure 8C is played with a stationary target; and
Figure 12 is a partially-broken perspective view of part of the stationary target of Figure 11.

### DETAILED DESCRIPTION OF PREFERRED EMBODIMENT

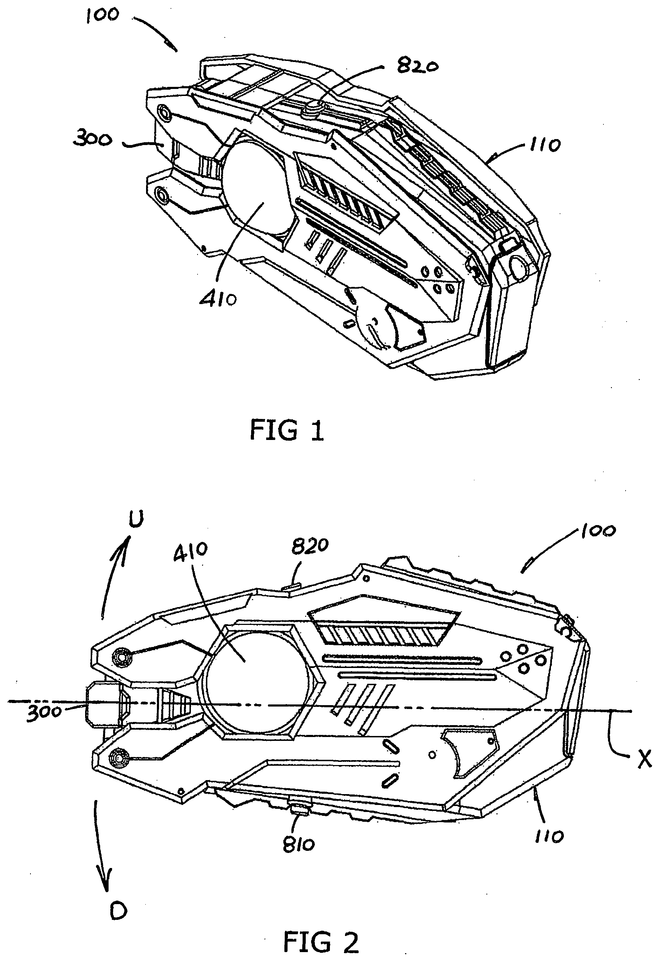

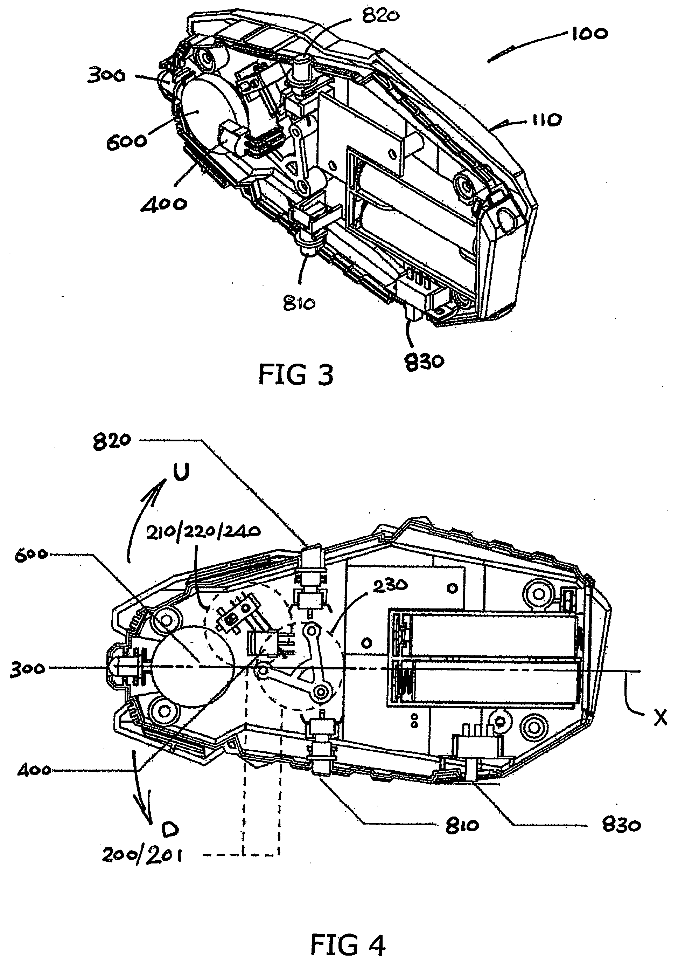

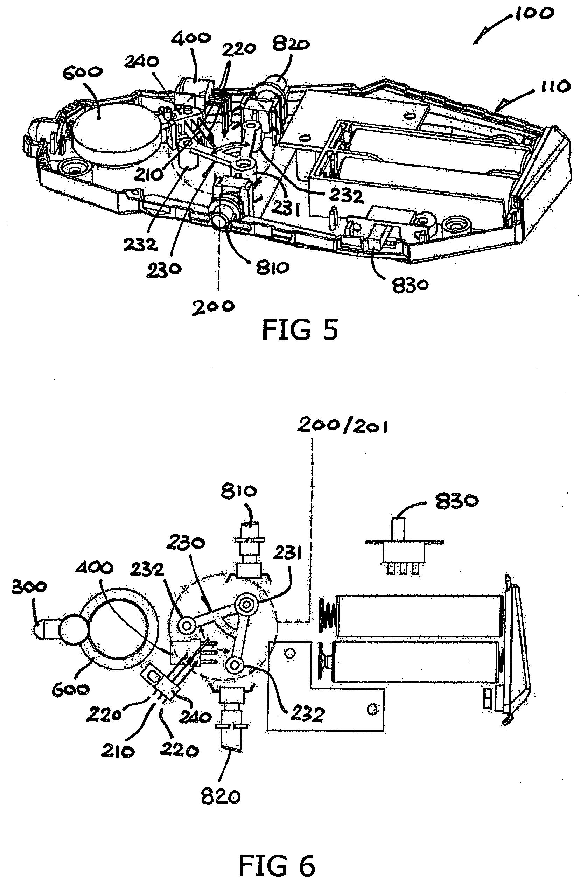

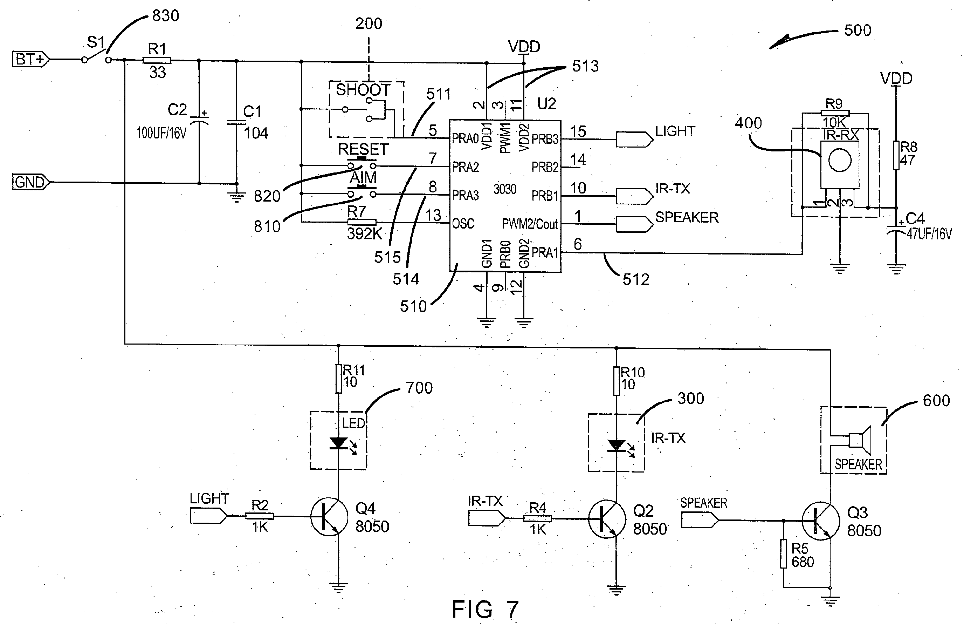

Referring firstly to Figures 1 to 10B of the drawings, there is shown a game weapon device 100 embodying the invention, which is intended for use primarily with another game weapon device during a combat game between two players, or alternatively with a target for a solo game. The game weapon device 100 has a portable body 110 and a motion sensor 200 provided at or in the body 110 for sensing a predetermined motion, and in particular a swing motion, of the body 110. The body 110 is generally flat planar and oblong in shape and is roughly palm-sized, having a central principal axis X along its length. Included and likewise provided at or in the body 110 are an emitter 300, a detector 400 and an electronic operating circuit 500 for controlling the operation of the game weapon device 100.

The emitter 300 is an infrared or IR emitter, which is a light emitting diode (LED) that emits an IR light or radiation at a very small angle of coverage such that the IR radiation is effectively a linear beam of IR light that projects in a specific direction i.e. the forward direction. In essence, the emitter 300 is a directional or beam emitter adapted to emit a radiation in a specific direction or to emit a beam of radiation.

The IR radiation may simply be plain light or contain a code, for example being encoded with a specific amplitude modulation (AM) pattern, for identification if desired (e.g. to distinguish it from other IR light). The detector 400 is an IR detector or receiver and serves to detect an IR radiation emitted by the IR emitter 300, which falls onto the detector's surface. If the IR radiation is encoded, the detector 400 is equipped with a suitable decoder.

The IR emitter 300 is mounted foremost at the front end of the body 110, and points in a forward direction generally parallel to the plane of the body 110 and, in particular, coinciding with the principal axis X of the body 110. Under the control of the operating circuit 500, the IR emitter 300 is, in response to the motion sensor 200 sensing a swing motion of the body 110, operable to emit an IR radiation in the forward direction from the body 110, which represents or stimulates firing of a shot from the game weapon device 100.

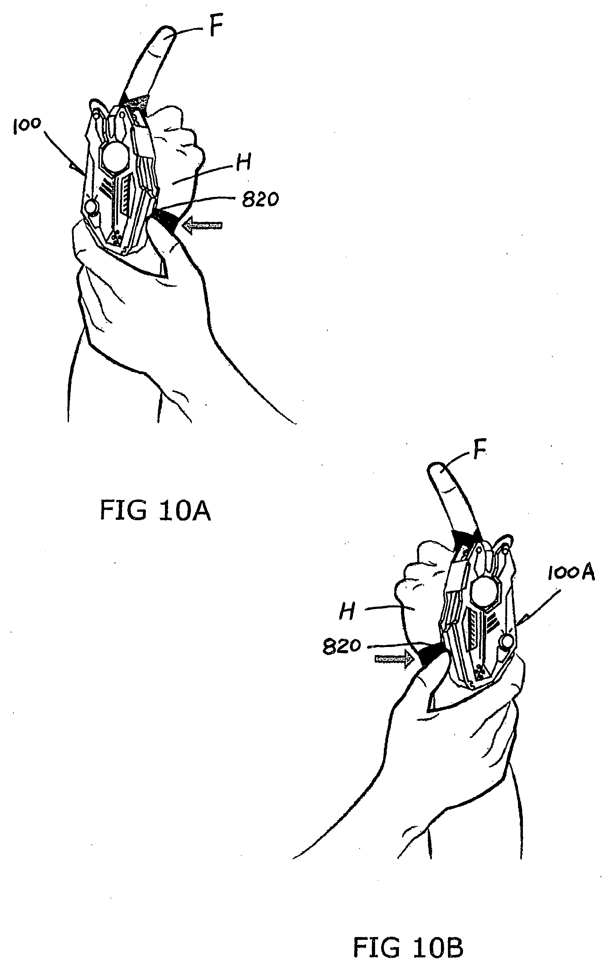

The IR detector 400 is mounted behind a lens 410 on an outer side laterally of the body 110 and faces in an outer direction at right angles to the outer side of the body 110. The IR detector 400 is designed and operable to detect an IR radiation emitted by the IR emitter 300 of another game weapon device 100A. of an opponent player (Figure 10B), which represents a hit by the other game weapon device 100A i.e. the opponent player.

The motion sensor 200 is a motion sensor switch 201 which is formed by at least one stationary contact 220, a movable contact 210 adjacent the stationary contact 220, and a weight 230 arranged to act upon the movable contact 210. In this particular embodiment, there are two such stationary contacts 220, which are provided by respective contact strips and are located symmetrically on opposite sides and close to the movable contact 210. The movable contact 210 is also provided by a contact strip but it is longer and protrudes beyond the stationary contacts 220 for engagement by the weight 230. The movable contact 210 is provided between the two stationary contacts 220 for movement by the weight 230 in opposite direction to come into contact with the relevant stationary contact 220 in its path in each direction. All three contact strips are fixed at one end by a block 240 such that their opposite free ends are flexible to a limited extent.

The weight 230 is arranged to move in response to a swing motion of the body 110 in either one of two opposite directions, i.e. up and down from the principal axis X, and then act upon the movable contact 210 to move the movable contact 210 into contact with the stationary contact 220 ahead, thereby momentarily closing and hence triggering the motion sensor switch 201.

Whilst the weight 230 may be provided at a free end of the movable contact 210 such that the movable contact 210 is weighted at its free end for flexing in response to acceleration or a jerk, it is in the described embodiment a separate part from the movable contact 210.

The weight 230 has an A-shaped body frame whose apex 231 is hinged to the device body 110 for pivotal movement in opposite directions and whose legs are thickened (or made of heavy material e.g. metal) at their free ends 232 to gather sufficient weight for responding to acceleration. The two weighted ends 232 are pivotable along an arcuate path, in which the free end of the movable contact 210 is positioned between the weighted ends 232 for engagement and movement by either weighted end 232 (i.e. like being hammered) as the weight 230 pivots to the opposite direction in response to a swing motion of the body 110.

In general, the weight 230 has two portions, i.e. its weighted ends 232, provided on opposite sides of the movable contact 210, with each portion 232 on one side of the movable contact 210 arranged to pivot the movable contact 210 into contact with the stationary contact 220 on the opposite side of the movable contact 210.

By virtue of the arrangement of the stationary contacts 220 about the movable contact 210 and the arrangement as well as construction of the weight 230 relative to the movable contact 210, the motion sensor 200 is adapted to sense a swing motion of the body 210, or the game weapon device 100 in whole, in either one of opposite directions (i.e. up and down from the principal axis X as shown in the drawings) transversely to the forward direction in which the IR emitter 300 is to emit an IR radiation.

The operating circuit 500 is built based on an IC (integrated circuit) counter chip 510 that includes two input pins 511 and 512 to which the motion sensor 200 and the IR detector 400 with related circuit components are respectively connected, and a pair of output pins 513 to which the IR emitter 300 with related circuit components is connected. Two further input pins 514 and 515 are used, to which a reload button 810 and reset button 820 are separately connected, as parts of the operating circuit 500. A speaker 600 (provided by a piezo-electric buzzer) and an LED 700 are also connected to the output pins 513, likewise as parts of the operating circuit 500. The operating circuit 500 includes an ON/OFF switch 830.

The motion sensor 200 provides an indirect trigger to the counter chip 510, which results from the action of the player launching an attack using the game weapon device 100, whereas the reload and reset buttons 810 and 820 act as manual reload/reset means to allow for direct user's control.

The counter chip 510 is programmed to include a hit register for registering a hit (i.e. a successful attack) each time when the IR detector 400 detects an IR radiation from the IR emitter 300 of the opponent player. The hit register is adapted to register the hits by counting the hits and keeping a hit count.

The operating circuit 510 is programmed to deactivate the IR emitter 300 after the emitter 300 has emitted a predetermined number of IR radiations e.g. six radiations. The reload button 810 may be pressed to re-activate the IR emitter after it has been deactivated. The operating circuit 510 is also adapted to deactivate the IR emitter upon the hit count reaching a predetermined number e.g. ten. The reset button 820 may be pressed to re-activate the IR emitter after it has been deactivated.

The speaker 600 acts as an audio signal generator for generating an audio signal, i.e. sound, to indicate a hit each time when the IR detector 400 detects an IR radiation. Simultaneously, or alternatively, the LED 700 implements a visual signal generator for generating a visual signal, i.e. light, to indicate a successful hit.

The game weapon device 100 is designed for use attached on the right (or left as shown in Figure 10B) hand H of a player. To this end, the body 110 includes attachment means 120 for attaching the body 110 to the player's hand H. The attachment means 120 is preferably provided by at least one elongate pliable or flexible member which in the simplest form is a strap or string.

The attachment means 120 for the game weapon device 100 has a first loop 121 for extending around the wrist of the player's hand H and a relatively smaller second loop 122 for extending around one finger and in particular the index finger F of that hand H. Both loops 121 and 122 are advantageously, but not necessarily, provided by nylon tapes. The first loop 121 is openable and includes closure means, e.g. hook-and-loop fasteners 123, for closing the loop 121, whereas the second loop 122 is permanently closed.

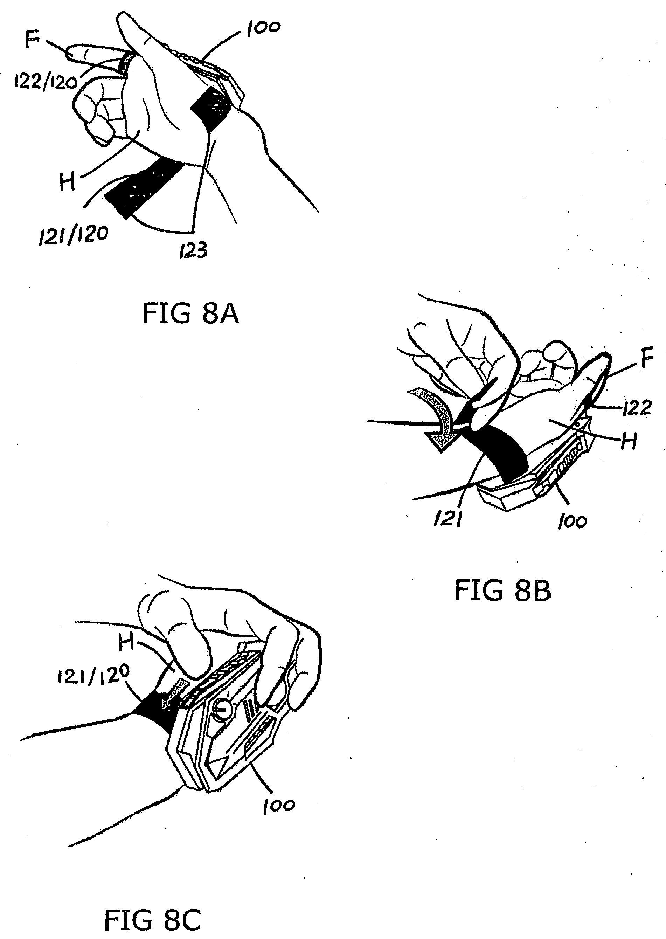

To attach the game weapon device 100 onto the hand H, the player should first insert his index finger F through the second loop 122, with the game weapon device 100 placed on the back of his hand H. The player should subsequently wrap the first loop 121 around his wrist (Figure 8A) and close the loop 121 by attaching the hook-and-loop fasters 123 (Figure 8B), thereby attaching the game weapon device 100 firm against the back of the hand. The game weapon device 100 (i.e. the operating circuit 500) may then be switched on by sliding the ON/OFF switch 830 (Figure 8C).

It is envisaged that the game weapon device 100 may be attached inside the palm of the player's hand H (using the attachment loops 121 and 122 in the same manner as described but on the opposite side of the hand) such that he can grasp the game weapon device 100 tight in his hand.

In a combat game between two players, each player should be provided with and mount a game weapon device 100 onto his hand as described above. The aim of the game is for one player to fire his game weapon device 100 at the other player's game weapon device 100, in that a successful hit is registered when the IR detector 400 of the other player detects an IR radiation emitted by the IR emitter 300 of the first player.

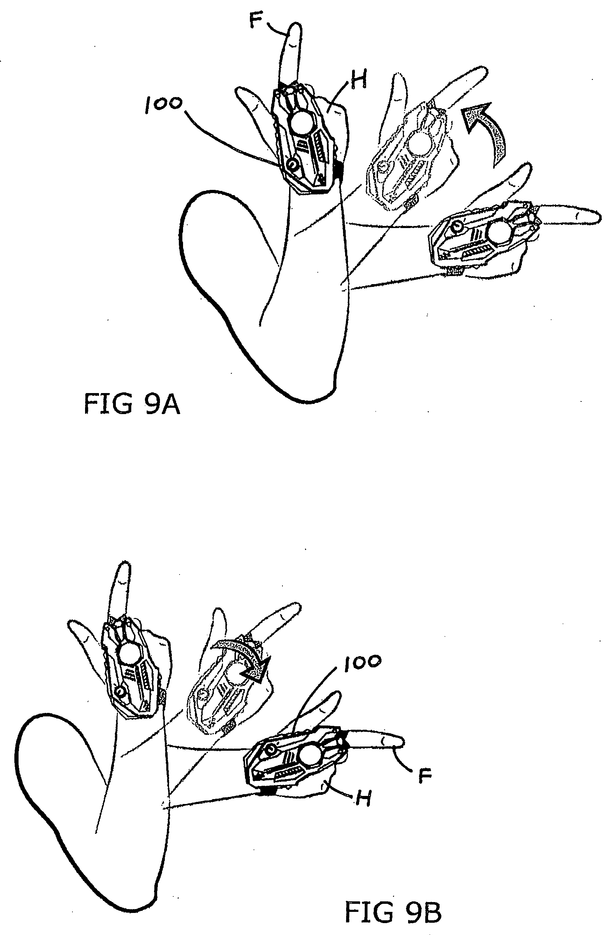

To fire the game weapon device 100, the player is to bend his elbow (Figure 9A) and then unfold it quickly to swing his game weapon device 100 outward (Figure 9B) in a direction pointing at the opponent's game weapon device 100, thereby triggering his IR emitter 300 to emit an IR radiation, mimicking firing a shot, at the opponent's IR detector 400.

The IR emitter 300 is positioned relative to the body 110 (i.e. mounted foremost at the body's front end) such that as the game weapon device 100 is swung out, it will emit an IR radiation, or fire or launch a shot, in a forward direction substantially parallel to the fingers, and in particular the index finger, of the player's hand H bearing the game weapon device 100.

As the IR radiation will be emitted or launched in the same direction as the hand H or arm of the player is swung out while aiming and shooting, such a player's posture or action is natural and realistic, as in the case of pulling out and firing a handgun or pistol, and hence interesting and preferred. Other than a handgun, the game weapon device 100 may alternatively be designed to simulate throwing of ninja darts or the like hand weapons.

To add realism, each shot is accompanied by a firing or bang sound generated by the speaker 600 and flashings of light by the LED 700. The player may fire several shots by repeatedly performing the swing motion i.e. swinging his game weapon device 100 as described. The number of rounds is limited to six as mentioned above, whereupon the game weapon device 100 requires reloading by the player pressing the reload button 810 in order to fire or shoot again.

The player will lose the game when his game weapon device 100 has received ten hits (i.e. the hit count reaching ten as mentioned above) i.e. he has been shot ten times. The IR emitter 300 will at once be deactivated, with the speaker 600 and LED 700 playing the relevant signals. To play the game again, the player should press the reset button 820 (Figure 10A or 10B) in order to fire or shoot again.

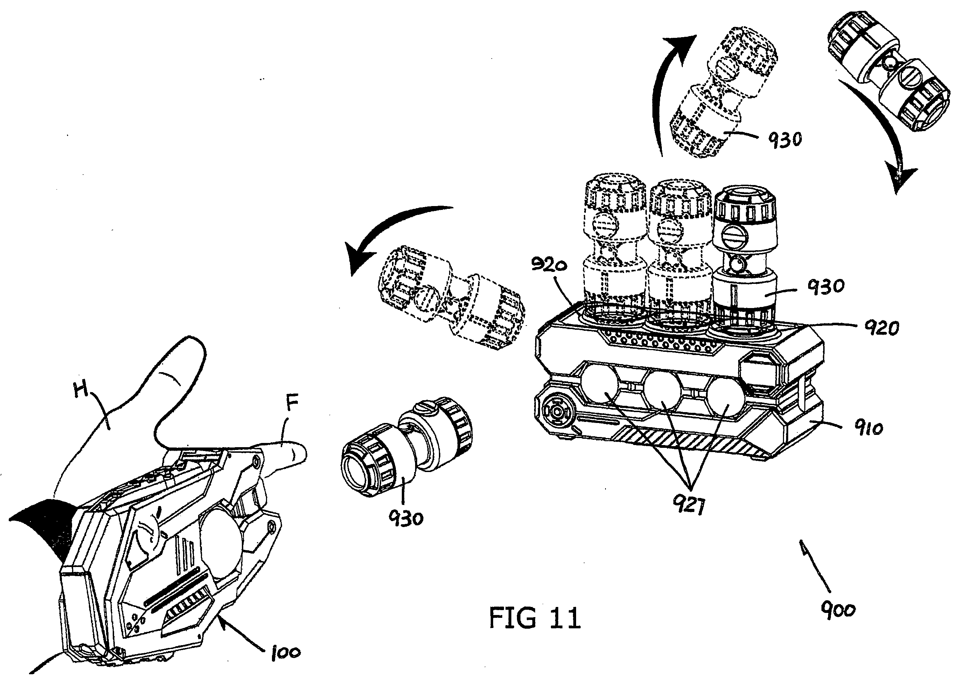

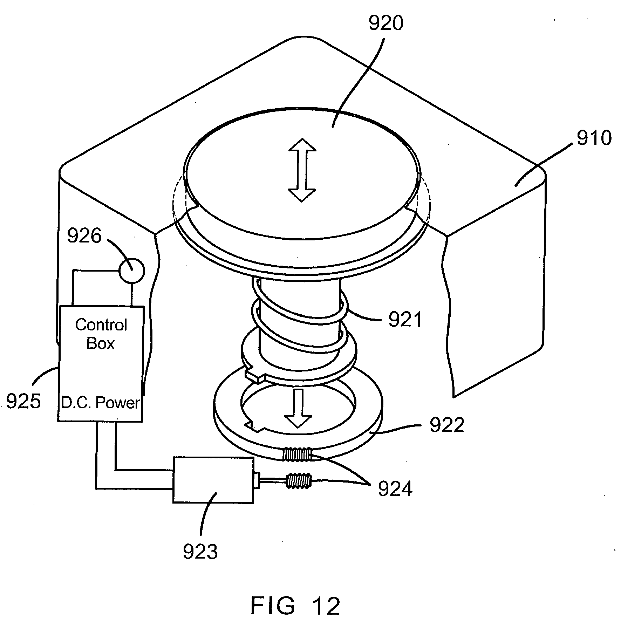

Reference is now made to Figures 11 and 12, which illustrate how the game weapon device 100 may be used in a solo shooting game that involves the use of a stationary target 900, instead of a moving target i.e. an opponent player with another game weapon device 100 in a combat game.

The stationary target 900 has a base 910 and three can-like target pieces 930 each free standing on a round platform 820 of the base 910. Each platform 920 is pre-loaded by a coil spring 921 below and locked in a lower position by an internal locking ring 922. The locking ring 922 is arranged for turning by an electric motor 923 via a pinion and gear 924 to release the platform 920, under the control of an electronic operating circuit 925.

The operating circuit 925 incorporates an IR detector 926 behind a lens 927 on the front side of the base 910, which is equivalent to the IR detector 400 described above, for detecting an IR radiation fired by the game weapon device 100. Upon the IR detector 926 receiving a hit, the operating circuit 925 will energize the motor 923 to release the platform 920, whereupon the platform 920 jerks upward to bounce off the target piece 930 on it. The player may reset the platform 920 by pressing it down back to the lower position, which will then be locked by the locking ring 922 again and ready for standing the same or another target piece 930 for another shooting.

By combining an emitter for firing and a detector for detecting a hit, the game weapon device of the subject invention provides an innovative way of playing a combat game between two or more players, or in a solo shooting game with a stationary target. In addition, the game weapon device can be made in a compact size for ease of playing and carrying.

It is envisaged that the emitter and detector may operate based on any other suitable types of radiation, such as low power laser.

## Claims

1. A game weapon device comprising:
a portable body;
a motion sensor provided at the body for sensing motion of the body;
an emitter provided at the body for, in response to the motion sensor sensing a predetermined motion of the body, emitting a radiation from the body, representing firing of the game weapon device; **characterised in that**
a detector is provided at the body for detecting a radiation emitted by the emitter of another game weapon device, representing a hit by said another game weapon device; and
an electronic operating circuit is provided at the body for controlling the operation of the game weapon device, including a hit register for registering a hit each time when the detector detects a radiation.

2. The game weapon device as claimed in claim 1, **characterized in that** the predetermined motion of the body comprises a swing motion.

3. The game weapon device as claimed in claim 1, **characterized in that** the body includes attachment means for attaching the body to one hand of a player.

4. The game weapon device as claimed in claim 3, **characterized in that** the attachment means comprises at least one strap.

5. The game weapon device as claimed in claim 3, **characterized in that** the attachment means comprises a first loop for extending around the wrist of said one hand of the player and a second loop for extending around one finger of said hand of the player.

6. The game weapon device as claimed in any one of claims 3 to 5, **characterized in that** the attachment means is adapted to attach the body onto the back of said one hand of the player.

7. The game weapon device as claimed in any one of claims 3 to 5, **characterized in that** the emitter is fixed to the body such that it emits a radiation in a forward direction substantially parallel to the fingers of said one hand of the player.

8. The game weapon device as claimed in any one of claims 1 to 5, **characterized in that** the emitter comprises an infrared emitter adapted to emit an infrared radiation.

9. The game weapon device as claimed in any one of claims 1 to 5, **characterized in that** the emitter is adapted to emit a radiation in a specific direction relative to the body, and the motion sensor is adapted to sense motion of the body in either one of opposite direction transversely to that specific direction.

10. The game weapon device as claimed in any one of claims 1 to 5, **characterized in that** the motion sensor comprises a stationary contact, a movable contact adjacent the stationary contact, and a weight arranged to move in response to motion of the body and act upon the movable contact to move the movable contact into contact with the stationary contact, thereby momentarily triggering the motion sensor.

11. The game weapon device as claimed in claim 10, **characterized in that** the motion sensor switch includes two said stationary contacts between which the movable contact is provided for movement by the weight in opposite directions to come into contact with the relevant stationary contact in its path in each direction.

12. The game weapon device as claimed in any one of claims 1, to 5, **characterized in that** the hit register is adapted to register the hits by counting the hits and keeping a hit count.

13. The game weapon device as claimed in claim 12, **characterized in that** the operating circuit is adapted to deactivate the emitter upon the hit count reaching a predetermined number, and preferably the operating circuit includes manual reset means for re-activating the emitter after it has been deactivated.

14. The game weapon device as claimed in any one of claims 1 to 5, **characterized in that** the operating circuit is adapted to deactivate the emitter upon the emitter having emitted a predetermined number of radiations, and preferably the operating circuit includes manual reload means for re-activating the emitter after it has been deactivated.

15. The game weapon device as claimed in any one of claims 1 to 5, **characterized in that** the operating circuit includes a signal generator for generating a signal to indicate a hit each time when the detector detects a radiation.

## Patentansprüche

1. Spielwaffenvorrichtung, umfassend:
ein tragbares Gehäuse;
einen am Gehäuse bereitgestellten Bewegungssensor zum Erfassen einer Bewegung des Gehäuses;
einen am Gehäuse bereitgestellten Impulsgeber zum Abgeben einer Strahlung vom Gehäuse, die das Feuern der Spielwaffenvorrichtung darstellt, in Reaktion auf das Erfassen einer festgelegten Bewegung des Gehäuses durch den Bewegungssensor; **dadurch gekennzeichnet, dass**
ein Detektor am Gehäuse zum Erkennen einer vom Impulsgeber einer anderen Spielwaffenvorrichtung abgegebenen Strahlung bereitgestellt ist, die einen Treffer durch die andere Spielwaffenvorrichtung darstellt; und
eine elektronische Betriebsschaltung zum Steuern des Betriebs der Spielwaffenvorrichtung am Gehäuse bereitgestellt ist, enthaltend ein Trefferverzeichnis zum Verzeichnen eines Treffers, jedes Mal, wenn der Detektor eine Strahlung erkennt.

2. Spielwaffenvorrichtung nach Anspruch 1, **dadurch gekennzeichnet, dass** die festgelegte Bewegung des Gehäuses eine schwingende Bewegung umfasst.

3. Spielwaffenvorrichtung nach Anspruch 1, **dadurch gekennzeichnet, dass** das Gehäuse ein Befestigungsmittel zum Befestigen des Gehäuses an einer Hand eines Spielers beinhaltet.

4. Spielwaffenvorrichtung nach Anspruch 3, **dadurch gekennzeichnet, dass** das Befestigungsmittel mindestens einen Riemen umfasst.

5. Spielwaffenvorrichtung nach Anspruch 3, **dadurch gekennzeichnet, dass** das Befestigungsmittel eine erste Schlaufe zum sich Erstrecken um das Handgelenk der einen Hand des Spielers und eine zweite Schlaufe zum sich Erstrecken um einen Finger der Hand des Spielers umfasst.

6. Spielwaffenvorrichtung nach einem der Ansprüche 3 bis 5, **dadurch gekennzeichnet, dass** das Befestigungsmittel dafür ausgelegt ist, das Gehäuse am Rücken der einen Hand des Spielers zu befestigen.

7. Spielwaffenvorrichtung nach einem der Ansprüche 3 bis 5, **dadurch gekennzeichnet, dass** der Impulsgeber so am Gehäuse befestigt ist, dass er eine Strahlung in eine Vorwärtsrichtung abgibt, die im Wesentlichen parallel zu den Fingern der einen Hand des Spielers ist.

8. Spielwaffenvorrichtung nach einem der Ansprüche 1 bis 5, **dadurch gekennzeichnet, dass** der Impulsgeber einen Infrarot-Impulsgeber umfasst, der dafür ausgelegt ist, eine Infrarotstrahlung abzugeben.

9. Spielwaffenvorrichtung nach einem der Ansprüche 1 bis 5, **dadurch gekennzeichnet, dass** der Impulsgeber dafür ausgelegt ist, eine Strahlung in eine bestimmte Richtung im Verhältnis zum Gehäuse abzugeben, und dass der Bewegungssensor dafür ausgelegt ist, eine Bewegung des Gehäuses in beide entgegengesetzte Richtungen quer zu dieser bestimmten Richtung zu erfassen.

10. Spielwaffenvorrichtung nach einem der Ansprüche 1 bis 5, **dadurch gekennzeichnet, dass** der Bewegungssensor eine feste Kontaktvorrichtung, eine bewegbare Kontaktvorrichtung, die neben der festen Kontaktvorrichtung liegt, und ein Gewicht umfasst, das dazu eingerichtet ist, sich in Reaktion auf eine Bewegung des Gehäuses zu bewegen und auf die bewegbare Kontaktvorrichtung einzuwirken, um die bewegbare Kontaktvorrichtung so zu bewegen, dass sie mit der festen Kontaktvorrichtung in Kontakt kommt, wodurch der Bewegungssensor vorübergehend ausgelöst wird.

11. Spielwaffenvorrichtung nach Anspruch 10, **dadurch gekennzeichnet, dass** der Schalter des Bewegungssensors zwei feste Kontaktvorrichtungen beinhaltet, zwischen denen die bewegbare Kontaktvorrichtung für eine Bewegung in entgegengesetzte Richtungen durch das Gewicht bereitgestellt ist, damit sie mit der entsprechenden festen Kontaktvorrichtung auf ihrem Weg in jeder Richtung in Kontakt kommt.

12. Spielwaffenvorrichtung nach einem der Ansprüche 1 bis 5, **dadurch gekennzeichnet, dass** das Trefferverzeichnis dafür ausgelegt ist, die Treffer durch Zählen der Treffer und Führen einer Trefferzahl zu verzeichnen.

13. Spielwaffenvorrichtung nach Anspruch 12, **dadurch gekennzeichnet, dass** die Betriebsschaltung dafür ausgelegt ist, den Impulsgeber zu deaktivieren, wenn die Trefferzahl eine festgelegte Anzahl erreicht, und die Betriebsschaltung vorzugsweise manuelle Rücksetzungsmittel zum erneuten Aktivieren des Impulsgebers nach dessen Deaktivierung beinhaltet.

14. Spielwaffenvorrichtung nach einem der Ansprüche 1 bis 5, **dadurch gekennzeichnet, dass** die Betriebsschaltung dafür ausgelegt ist, den Impulsgeber zu deaktivieren, wenn der Impulsgeber eine festgelegte Anzahl an Strahlungen abgegeben hat, und die Betriebsschaltung vorzugsweise manuelle Mittel zum Neuladen zum erneuten Aktivieren des Impulsgebers nach dessen Deaktivierung beinhaltet.

15. Spielwaffenvorrichtung nach einem der Ansprüche 1 bis 5, **dadurch gekennzeichnet, dass** die Betriebsschaltung eine Signalerzeugungsvorrichtung zum Erzeugen eines Signals zum Anzeigen eines Treffers, jedes Mal, wenn der Detektor eine Strahlung erkennt, beinhaltet.

## Revendications

1. Dispositif d'arme de jeu comprenant :
un boîtier portable ;
un capteur de mouvement prévu au niveau du boîtier pour capter le mouvement du boîtier ;
un émetteur prévu dans le boîtier pour, en réaction au captage d'un mouvement prédéterminé du boîtier par le capteur de mouvement, émettre un rayonnement à partir du boîtier, représentant un tir effectué par le dispositif d'arme de jeu ; **caractérisé en ce que**
un détecteur est prévu dans le boîtier pour détecter un rayonnement émis par l'émetteur d'un autre dispositif d'arme de jeu, représentant une touche réalisée par ledit autre dispositif d'arme de jeu ; et
un circuit électronique d'exploitation prévu dans le boîtier pour assurer le fonctionnement du dispositif d'arme de jeu, comportant un registre de touches permettant d'enregistrer une touche chaque fois que le détecteur détecte un rayonnement.

2. Dispositif d'arme de jeu selon la revendication 1, **caractérisé en ce que** le mouvement prédéterminé du boîtier comprend un mouvement de balancement.

3. Dispositif d'arme de jeu selon la revendication 1, **caractérisé en ce que** le boîtier comporte un moyen de fixation permettant de fixer le boîtier à une main du joueur.

4. Dispositif d'arme de jeu selon la revendication 3, **caractérisé en ce que** le moyen de fixation comprend au moins une sangle.

5. Dispositif d'arme de jeu selon la revendication 3, **caractérisé en ce que** le moyen de fixation comprend une première boucle à passer autour du poignet de ladite une main du joueur et une seconde boucle à passer autour d'un doigt de ladite main du joueur.

6. Dispositif d'arme de jeu selon l'une quelconque des revendications 3 à 5, **caractérisé en ce que** le moyen de fixation est conçu pour attacher le boîtier sur le dos de ladite une main du joueur.

7. Dispositif d'arme de jeu selon l'une quelconque des revendications 3 à 5, **caractérisé en ce que** l'émetteur est fixé au boîtier de manière à émettre un rayonnement vers l'avant de manière sensiblement parallèle aux doigts de ladite une main du joueur.

8. Dispositif d'arme de jeu selon l'une quelconque des revendications 1 à 5, **caractérisé en ce que** l'émetteur comprend un émetteur infrarouge conçu pour émettre un rayonnement infrarouge.

9. Dispositif d'arme de jeu selon l'une quelconque des revendications 1 à 5, **caractérisé en ce que** l'émetteur est conçu pour émettre un rayonnement dans un sens spécifique par rapport au boîtier, et le capteur de mouvement est conçu pour capter le mouvement du boîtier dans l'un ou l'autre des sens opposés transversaux audit sens spécifique.

10. Dispositif d'arme de jeu selon l'une quelconque des revendications 1 à 5, **caractérisé en ce que** le capteur de mouvement comprend un contact fixe, un contact mobile contigu au contact fixe, et un poids agencé pour se déplacer en réaction au mouvement du boîtier et agir sur le contact mobile en mettant ce contact mobile en contact avec le contact fixe, pour ainsi déclencher temporairement le capteur de mouvement.

11. Dispositif d'arme de jeu selon la revendication 10, **caractérisé en ce que** le commutateur du capteur de mouvement comporte deux desdits contacts fixes entre lesquels est prévu le contact mobile déplaçable sous l'effet du poids dans des sens opposés pour venir en contact avec le contact fixe correspondant situé sur sa trajectoire dans chaque sens.

12. Dispositif d'arme de jeu selon l'une quelconque des revendications 1 à 5, **caractérisé en ce que** le registre de touches est conçu pour enregistrer les touches en comptant les touches et en tenant le compte des touches.

13. Dispositif d'arme de jeu selon la revendication 12, **caractérisé en ce que** le circuit d'exploitation est conçu pour désactiver l'émetteur une fois que le compte des touches a atteint un nombre prédéterminé, et le circuit d'exploitation comporte de préférence un moyen de réinitialisation manuel permettant de réactiver l'émetteur après sa désactivation.

14. Dispositif d'arme de jeu selon l'une quelconque des revendications 1 à 5, **caractérisé en ce que** le circuit d'exploitation est conçu pour désactiver l'émetteur une fois que l'émetteur a émis un nombre prédéterminé de rayonnements, et le circuit d'exploitation comporte de préférence un moyen de recharge manuel permettant de réactiver l'émetteur après sa désactivation.

15. Dispositif d'arme de jeu selon l'une quelconque des revendications 1 à 5, **caractérisé en ce que** le circuit d'exploitation comporte un générateur de signaux destiné à générer un signal indicatif d'une touche chaque fois que le détecteur détecte un rayonnement.
